Europäisches Patentamt

European Patent Office

Office européen des brevets

(11) Veröffentlichungsnummer: **0 301 160**
A2

# EUROPÄISCHE PATENTANMELDUNG

(21) Anmeldenummer: 88102358.4

(22) Anmeldetag: 18.02.88

(51) Int. Cl.4: **G06F 15/16**

Die Bezeichnung der Erfindung wurde geändert
(Richtlinien für die Prüfung im EPA, A-III, 7.3).

(30) Priorität: 16.05.87 DE 3716506

(43) Veröffentlichungstag der Anmeldung:
01.02.89 Patentblatt 89/05

(84) Benannte Vertragsstaaten:
DE FR GB SE

(71) Anmelder: VDO Adolf Schindling AG
Gräfstrasse 103
D-6000 Frankfurt/Main(DE)

(72) Erfinder: Rossberg, Rainer
Schliesienstrasse 5
D-6231 Schwalbach/Ts.(DE)

(74) Vertreter: Klein, Thomas, Dipl.-Ing. (FH)
Sodener Strasse 9 Postfach 6140
D-6231 Schwalbach a. Ts.(DE)

(54) System mit zwei Mikroprozessoren und einem gemeinsamen Schreibe-Lese-Speicher.

(57) Bei einem System mit zwei Mikroprozessoren
mit je einem Bussystem und einem gemeinsamen
Schreib-Lese-Speicher ist der gemeinsame Schreib-
Lese-Speicher über je einen schaltbaren Bustreiber
mit den Bussystemen der Mikroprozessoren verbindbar. Ein Handshake-Ausgang (HMS) eines der Mikroprozessoren, welcher als Master-Prozessor betrieben
wird, ist mit dem anderen Mikroprozessor und mit
Steuereingängen der Bustreiber verbunden.

EP 0 301 160 A2

## System mit zwei Mikroprozessoren

Die Erfindung betrifft ein System mit zwei Mikroprozessoren mit je einem Bussystem und einem gemeinsamen Schreib-Lese-Speicher.

Für den Austausch von Daten zwischen zwei Mikroprozessoren werden häufig Schreib-Lese-Speicher verwendet, auf welche beide Mikroprozessoren zugreifen können. Hierzu ist ein Verfahren bekannt, bei welchem beide Mikroprozessoren mit synchronem Takt arbeiten und einer der Mikroprozessoren auf den Speicher zugreift, während der andere mit internen Operationen beschäftigt ist. Auch für asynchron arbeitende Mikroprozessoren sind Verfahren zur Steuerung des Speicherzugriffs bekannt. So ist es beispielsweise möglich, im Falle des Zugriffs durch einen Mikroprozessor den Zugriff durch den zweiten Mikroprozessor zu verzögern, was durch ein entsprechendes Signal an einem WAIT-Eingang möglich ist. Zur Durchführung dieses Verfahrens stehen handelsübliche sogenannte Dual-port-RAMs zur Verfügung.

Aufgabe der vorliegenden Erfindung ist es, ein besonders einfaches System vorzuschlagen, bei welchem zwei Mikroprozessoren Zugriff auf einen gemeinsamen Schreib-Lese-Speicher haben.

Das erfindungsgemäße System ist dadurch gekennzeichnet, daß der gemeinsame Schreib-Lese-Speicher über je einen schaltbaren Bustreiber mit den Bussystemen der Mikroprozessoren verbindbar ist und daß ein Handshake-Ausgang (HMS) eines der Mikroprozessoren, welcher als Master-Prozessor betrieben wird, mit dem anderen Mikroprozessor und mit Steuereingängen der Bustreiber verbunden ist.

Bei dem erfindungsgemäßen System werden nur wenige zusätzliche Bauelemente benötigt, so daß es in wirtschaftlicher Weise verwirklicht werden kann.

Da jeweils einer der Bustreiber aktiv und der andere passiv ist, ist es erforderlich, daß der Steuereingang eines der Bustreiber über einen Invertierer angeschlossen ist, sofern nicht mindestens einer der Bustreiber bereits einen invertierenden Eingang aufweist.

Das Zugriffsrecht wird bei dem erfindungsgemäßen System von dem Master-Prozessor bestimmt und dem Slave-Prozessor über die Handshake-Leitung mitgeteilt. Der Master-Prozessor schaltet gleichzeitig den gemeinsamen Speicher an sein eigenes Bussystem. Während der übrigen Zeit kann der Slave-Prozessor auf den gemeinsamen Speicher zugreifen.

Weil der Master-Prozessor jederzeit die Möglichkeit hat, auf den gemeinsamen Speicher zuzugreifen, ist nicht ohne weiteres gewährleistet, daß der Zugriff des Slave-Prozessors unzulässig gestört wird. Daher ist es notwendig, daß die Programme des Master- und des Slave-Prozessors, die aufeinander abgestimmt sein müssen, synchron abgearbeitet werden. Diese Synchronisation wird ebenfalls über die Handshake-Leitung durchgeführt.

Eine Weiterbildung der Erfindung besteht darin, daß bei Mikroprozessoren mit Multiplex-Bussystemen zwischen den Bustreibern und Adresseneingängen des Schreib-Lese-Speichers ein Mehrfachregister vorgesehen ist.

Die Erfindung schließt nicht aus, daß an die Bussysteme der Mikrocomputer noch weitere Einheiten, wie beispielsweise weitere Schreib-Lese-Speicher, Nur-Lese-Speicher und Ein/Ausgabe-Einheiten angeschlossen werden. Um auch in diesem Fall einen Zugriff auf den gemeinsamen Schreib-Lese-Speicher über das jeweilige Bussystem zu ermöglichen, ist gemäß einer Weiterbildung der Erfindung vorgesehen, daß an die Bustreiber ferner ein Decoder zur Erzeugung eines Auswahlsignals (CS = chip select) angeschlossen ist.

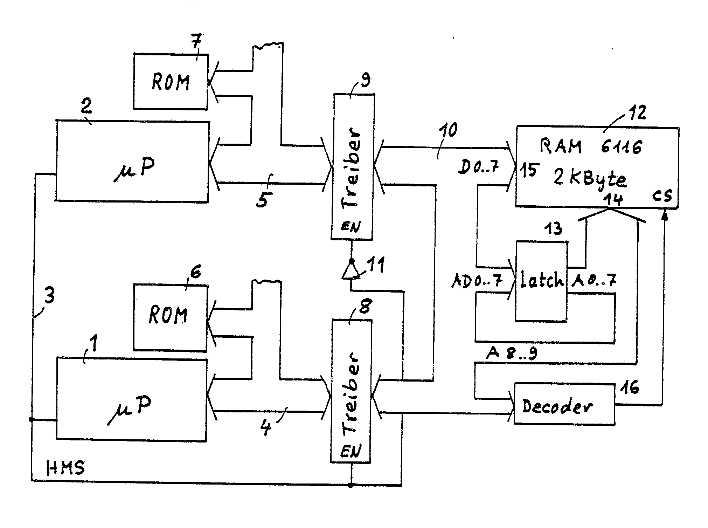

Die Erfindung läßt zahlreiche Ausführungsformen zu. Eine davon ist schematisch als Blockschaltbild in der Zeichnung dargestellt und nachfolgend beschrieben.

Der Mikroprozessor 1 wird als Master-Prozessor betrieben, während der Mikroprozessor 2 als sogenannter Slave-Prozessor arbeitet. Beide sind durch eine Handshake-Leitung 3 (HMS) miteinander verbunden.

Beide Mikroprozessoren verfügen über je ein Bussystem 4, 5, welche nur teilweise dargestellt sind und den jeweiligen Mikroprozessor 1, 2 mit einer Reihe von weiteren Bausteinen verbinden, von denen stellvertretend jeweils nur ein Nur-Lese-Speicher (ROM) 6, 7 dargestellt ist.

Die Bussysteme 4, 5 sind über bidirektionale schaltbare Bustreiber 8, 9 mit einem weiteren Bussystem 10, im folgenden Speicherbus genannt, verbunden. Als Bustreiber 8, 9 eignen sich beispielsweise integrierte Schaltkreise vom Typ HC 245, von denen jeweils zwei parallelgeschaltet werden. Die Bustreiber 8, 9 werden wechselweise über die Handshake-Leitung 3 aktiviert. Dazu ist die Handshake-Leitung 3 mit einem Steuereingang (ENABLE) des Bustreibers 8 direkt und mit dem entsprechenden Eingang des Bustreibers 9 über einen Invertierer 11 verbunden. Weitere Steuerungen der Bustreiber 8, 9 - wie beispielsweise die an sich bekannte Richtungsumschaltung durch ein Schreib-Lese-Signal - sind der Übersichtlichkeit halber in der Zeichnung nicht dargestellt.

Da über die Bustreiber außer den Daten und Adressen noch andere Signale, wie beispielsweise das Schreib-Lese-Signal (RD/ $\overline{WR}$ ) und ein Adressen-Register-Steuersignal (ALE = Address Latch Enable) geführt wird, wurde bei dem dargestellten Ausführungsbeispiel das elfte Adressen-Bit (A 10) nicht über die Bustreiber 8, 9 geleitet, um mit jeweils zwei acht Bit breiten Bustreibern auszukommen. Für den Zugriff auf den gemeinsamen Speicher stehen dann nur 1024 Adressen zur Verfügung.

Die Leitungen 0 bis 7 des Speicherbusses 10 sind mit den Datenein/-ausgängen 15 des Schreib-Lese-Speichers 12 sowie mit den Eingängen eines Registers 13 verbunden. Die Bussysteme des dargestellten Ausführungsbeispiels werden im Multiplex betrieben, wobei zunächst die Adressenbits 0 bis 7 und danach die Datenbits 0 bis 7 zusammen mit den Adressenbits 8 und 9 übertragen werden. Mit Hilfe des Registers werden die Adressenbits 0 bis 7 für eine Taktperiode zwischengespeichert, so daß die vollständige Adresse an den Adresseneingängen 14 des Schreib-Lese-Speichers 12 anliegt, wenn die Daten an den Datenein/-ausgängen 15 eintreffen bzw. im Falle des Lesens vom Schreib-Lese-Speicher 12 ausgegeben werden. Aus Gründen der Verfügbarkeit wurde bei dem Ausführungsbeispiel ein 2-KByte-Schreib-Lese-Speicher verwendet, dessen Kapazität jedoch nur zur Hälfte genutzt wird. Der Adresseneingang A 10 erhält einen konstanten Pegel, entweder H oder L.

Mit Hilfe eines Decoders 16 wird aus dem Adressenbereich E000 bis E3FF, der für den Schreib-Lese-Speicher 12 vorgesehen ist, ein Auswahlimpuls (CS = chip select) abgeleitet und dem Schreib-Lese-Speicher 12 zugeführt. Als Schreib-Lese-Speicher 12 eignet sich beispielsweise ein CMOS-RAM vom Typ 6116, dessen Kapazität 2 KByte beträgt. Das Register 13 sowie der Decoder 16 können mit integrierten Schaltungen der Typen HC 373 und HC 138 verwirklicht werden.

## Ansprüche

1. System mit zwei Mikroprozessoren mit je einem Bussystem und einem gemeinsamen Schreib-Lese-Speicher, dadurch gekennzeichnet, daß der gemeinsame Schreib-Lese-Speicher (12) über je einen schaltbaren Bustreiber (8, 9) mit den Bussystemen (4, 5) der Mikroprozessoren (1, 2) verbindbar ist und daß ein Handshake-Ausgang (HMS) (3) eines der Mikroprozessoren (1), welcher als Master-Prozessor betrieben wird, mit dem anderen Mikroprozessor (2) und mit Steuereingängen der Bustreiber (8, 9) verbunden ist.

2. System nach Anspruch 1, dadurch gekennzeichnet, daß der Steuereingang eines der Bustreiber (9) über einen Invertierer (11) angeschlossen ist.

3. System nach einem der Ansprüche 1 oder 2, dadurch gekennzeichnet, daß bei Mikroprozessoren (1, 2) mit Multiplex-Bussystemen zwischen den Bustreibern (4, 5) und Adresseneingängen (14) des Schreib-Lese-Speichers (12) ein Mehrfachregister (13) vorgesehen ist.

4. System nach einem der vorhergehenden Ansprüche, dadurch gekennzeichnet, daß an die Bustreiber (8, 9) ferner ein Decoder (16) zur Erzeugung eines Auswahlsignals (CS = chip select) angeschlossen ist.